# EUROPÄISCHE PATENTSCHRIFT

(11) **EP 1 490 735 B1**
(45) Veröffentlichungstag und Bekanntmachung des Hinweises auf die Patenterteilung: **02.11.2006**
(21) Anmeldenummer: 03711843.7
(22) Anmeldetag: 12.03.2003
(51) Int. Cl.: G05B 13/02

(54) **VERFAHREN UND REGLER ZUR ADAPTIVEN REGELUNG MINDESTENS EINER KOMPONENTE EINER TECHNISCHEN ANLAGE**
METHOD AND CONTROLLER FOR THE ADAPTIVE CONTROL OF AT LEAST ONE COMPONENT OF A TECHNICAL PLANT
PROCEDE ET REGULATEUR PERMETTANT LA REGULATION ADAPTATIVE D'AU MOINS UNE COMPOSANTE D'UNE INSTALLATION TECHNIQUE

(30) Priorität: 26.03.2002 DE 10213533
(43) Veröffentlichungstag der Anmeldung: 29.12.2004
(73) Patentinhaber: SIEMENS AKTIENGESELLSCHAFT, 80333 München (DE)
(72) Erfinder: WENDELBERGER, Klaus-Walter, 91322 Gräfenberg (DE); HAGUET, Magalie, F-94360 Bry sur Marne (FR)
(86) Internationale Anmeldenummer: PCT/DE2003/000793
(87) Internationale Veröffentlichungsnummer: WO 2003/081348

(56) Entgegenhaltungen:
- DE-A- 1 588 341
- DE-A- 3 636 512
- US-A- 3 798 426
- US-A- 4 349 868
- US-A- 5 506 768
- US-A- 5 587 896

## Beschreibung

Die Erfindung betrifft ein Verfahren zur Regelung mindestens einer Komponente einer technischen Anlage sowie einen entsprechenden Regler.

Ausgangspunkt ist dabei ein konventionelles Regelungskonzept, wonach eine Regelgröße einer Komponente der technischen Anlage mittels eines PI-Reglers möglichst gut auf einem Sollwert der Regelgröße gehalten werden soll. Der PI-Regler ermittelt dabei aus der Differenz des Sollwerts und des Istwerts der Regelgröße (Regelabweichung) einen Stelleingriff auf einen der Komponente zugeordneten Aktor, so dass die Regelgröße den gewünschten Sollwert zum einen möglichst schnell und genau erreicht und zum anderen sich im Verlauf der Regelung möglichst wenig von diesem Sollwert entfernt. Insbesondere soll verhindert werden, dass der Istwert der Regelgröße eine zu starke Schwingung aufweist, so dass das Regelsystem bestehend aus der Komponente der technischen Anlage und dem Regler womöglich zu Instabilitäten neigt.

Bei der Regelung von Kraftwerkskomponenten ist es beispielsweise bekannt, Regelparameter eines zur Regelung eingesetzten PI-Reglers, insbesondere den Verstärkungsfaktor und die Nachstellzeit, jeweils vorab auf einen konstanten Wert einzustellen und während des Regelvorgangs beim Betrieb der Anlage nicht mehr zu verändern. Dies hat den Vorteil, dass bei der Verwendung eines PI-Reglers nur wenige Parameter eingestellt werden müssen, insbesondere die vorher genannten Reglerparameter, und dass während des Regelvorgangs oftmals keine weiteren Einstellungen mehr vorgenommen werden müssen.

Jedoch ist die Verwendung von einmal vorab eingestellten Parameterwerten für den PI-Regler insbesondere bei der Regelung von Kraftwerksanlagen nicht immer optimal, da sich im Laufe der Zeit während des Betriebs der Kraftwerksanlage das dynamische Verhalten eines durch die Komponente der technischen Anlage verwirklichten verfahrenstechnischen Prozesses verändern kann. Somit sind die einmal vorab eingestellten Reglerparameter nach einer derartigen Veränderung des dynamischen Verhaltens der Komponente für den nun vorliegenden neuen Betriebsfall nicht mehr optimal und führen u.U. sogar zu einem Versagen der Regelung, so dass ein einmal gewünschter Regelerfolg nicht mehr erzielbar ist. Beispielsweise kann es nach einer Änderung des dynamischen Verhaltens der Regelstrecke (Komponente) und somit des durch die Komponente und den PI-Regler gebildeten Regelkreises dazu führen, dass der Istwert der Regelgröße beim Regelvorgang zu unerwünschten Schwingungen neigt, was zu einer Instabilität der geregelten Strecke führen kann. Um eine derartige Regelung wieder für den Einsatz während des Betriebs der technischen Anlage zu ertüchtigen, ist es meist notwendig, zumindest die betreffende Komponente der technischen Anlage außer Betrieb zu nehmen, die Reglerparameter entsprechend des geänderten dynamischen Verhaltens der Regelstrecke neu einzustellen - was möglicherweise Umfangreiche Testläufe vor erneuter Inbetriebnahme notwendig macht - und die Komponente einschließlich ihres Reglers anschließend wieder in Betrieb zu nehmen.

Abgesehen davon, dass eine funktionsuntüchtig gewordener Regelkreis der technischen Anlage zur Gefährdung von Maschinen und menschlichem Bedienpersonal führen kann - insbesondere wenn eine instabil gewordene Regelstrecke viel zu große Stelleingriffe und/oder viel zu große Istwerte der Regelgröße erzeugt -, ist infolge der zwangsläufig erforderlichen Stillstandszeit zur Instandsetzung der Regelung ein Produktionsausfall der technischen Anlage praktisch unvermeidlich. Wenn es sich bei der technischen Anlage um eine Kraftwerksanlage handelt, so kann ein Ausfall einer Komponente der technischen Anlage beispielsweise dazu führen, die Versorgung eines Gebiets mit elektrischer Energie zu gefährden.

Die Verwendung von konstanten Werten für den PI-Regler führt insbesondere bei der Verwendung zur Regelung in Kraftwerksanlagen mit einem Dampfprozess zu Problemen, da in einem derartigen Kraftwerk zu beherrschende Regelstrecken oftmals ein nichtlineares Verhalten aufweisen. Ein Satz von Parameterwerten für den PI-Regler, der für einen Betriebszustand der zu regelnden Komponente als optimal angesehen werden kann, kann für einen anderen Betriebsfall dieser Komponente infolge der vorhandenen Nichtlinearitäten zumindest nur bedingt brauchbare Regelergebnisse liefern. Verschiebt sich also der Arbeitspunkt einer zu regelnden, nichtlinearen Komponente der technischen Anlage während des Betriebs der technischen Anlage - was zwangsläufig vorkommt -, so sind die einmal eingestellten Reglerparameter für den nun vorliegenden, neuen Betriebspunkt (Arbeitspunkt) der Komponente womöglich nicht mehr geeignet, um einen gewünschten Regelerfolg herbeizuführen. Dies kann sogar so weit führen, dass ein PI-Regler für einen Betriebspunkt der Komponente ein optimales Regelverhalten zeigt, aber beim Übergang auf einen neuen Betriebspunkt völlig unzureichende oder sogar gefährdende Regelergebnisse liefert.

Die Druckschrift US 3,798,426 zeigt ein System zur Regelung von Prozessen, wobei ein adaptiver Regler verwendet wird, dessen Proportionalanteil angepasst werden kann. Die Nachstellzeit des Integralanteils ist vorgegeben. Nach einer Änderung des Stellwertes wird der Proportional solange verändert, bis sich der Istwert der geregelten Prozessgröße innerhalb eines Toleranzbandes befindet, das durch die Definition eines oberhalb des Sollwertes liegenden Grenzwertes bzw. eines unterhalb des Sollwertes liegenden Grenzwertes gegeben ist.

Der Erfindung liegt daher die Aufgabe zugrunde, ein verbessertes Verfahren sowie einen Regler zur Regelung mindestens einer Komponente einer technischen Anlage anzugeben. Dabei sollen insbesondere beschriebene Nachteile aus dem Stand der Technik überwunden werden. Ferner soll ein erfindungsgemäßes Regelverfahren sowie ein erfindungsgemäßer Regler den Aufwand für die Einstellung der Reglerparameter reduzieren. Außerdem sollen ein erfindungsgemäßes Verfahren sowie ein erfindungsgemäßer Regler eine besonders einfache Inbetriebsetzung einer zu regelnden Komponente ermöglichen.

Bezüglich des Verfahrens wird die Aufgabe erfindungsgemäß gelöst durch ein Verfahren zur Regelung mindestens einer Komponente einer technischen Anlage mittels eines PI-Reglers, wel-cher als Reglerparameter einen Verstärkungsfaktor und eine Nachstellzeit umfasst, mit folgenden Schritten:
1. Die Nachstellzeit wird vorgegeben.
2. Ein Anfangswert des Verstärkungsfaktors wird vorgegeben.
3. Mindestens ein Sollwert einer Regelgröße der Komponente wird vorgegeben, und
4. während des Betriebs der technischen Anlage wird laufend der Istwert der Regelgröße bestimmt und der Verstärkungsfaktor in Abhängigkeit vom zeitlichen Verhalten des Istwerts verändert, bis der Istwert der Regelgröße innerhalb eines Toleranzbandes bezüglich des Sollwertes verbleibt.

Die Erfindung geht dabei von der Überlegung aus, dass die Reglerparameter dann besonders gut festgelegt werden können, wenn das Verhalten der geregelten Strecke, also das Zusammenwirken des PI-Reglers und der zu regelnden Komponente, während des Betriebs der technischen Anlage beobachtet wird und entsprechend des Verhaltens des Istwerts der Regelgröße der Verstärkungsfaktor des PI-Reglers während des Betriebs der technischen Anlage automatisch so lange verändert wird, bis sich der Istwert der Regelgröße im genannten Toleranzband bezüglich des vorgegebenen Sollwerts befindet und darin verbleibt. Veränderungen des Verstärkungsfaktors werden also nicht laufend vorgenommen, sondern nur so lange, bis der Istwert der Regelgröße bezüglich des Toleranzbandes ein gewünschtes Verhalten zeigt, sich also während des Betriebs der technischen Anlage wertmäßig innerhalb des Toleranzbandes bewegt. Wenn nun im Verlauf des Betriebs die geregelte Komponente einer Veränderung bezüglich ihres dynamischen Verhaltens unterliegt, beispielsweise verursacht durch Materialverschleiß und/oder Ablagerung von Betriebs- oder Hilfsstoffen der Komponente, oder durch Alterung von Teilen der Komponente, so wird der Verstärkungsfaktor bei der Durchführung des erfindungsgemäßen Verfahrens erst dann wieder verändert, wenn der Istwert der Regelgröße sich wertmäßig vom Toleranzband entfernt. Diese erneute laufende Veränderung des Verstärkungsfaktors geschieht wieder nur so lange, bis der Istwert wieder ins Toleranzband eintaucht und dort verbleibt.

Durch das erfindungsgemäße Verfahren ist ein Verfahren zur automatischen Adaption des Verstärkungsfaktors des PI-Reglers realisiert, wobei während des Betriebs der technischen Anlage abhängig vom Verhalten des Istwerts der Regelgröße der Verstärkungsfaktor automatisch so lange verändert wird, bis er zu einem gewünschten Regelverhalten der geregelten Komponente führt. Eine erneute Veränderung des Verstärkungsfaktors erfolgt nur, wenn sich der Istwert der Regelgröße wieder Wertmäßig vom Toleranzband entfernt. Die laufende Veränderung des Verstärkungsfaktors kann beispielsweise mittels einer schrittweisen Veränderung des aktuellen Werts des Verstärkungsfaktors um einen festgelegten Betrag erfolgen.

Der Reglerparameter Nachstellzeit wird beim erfindungsgemäßen Verfahren vorab festgelegt, während des Betriebs der technischen Anlage also nicht laufend verändert.

Untersuchungen von geregelten Strecken haben gezeigt, dass ein Vorab-Einstellen des Reglerparameters Nachstellzeit meist ausreichend ist, um ein gutes, gewünschtes Regelverhalten der geregelten Stecke zu erzielen. Es ist also nicht erforderlich, zur Erzielung eines guten Regelergebnisses während des Betriebs der technischen Anlage auch den Reglerparameter Nachstellzeit laufend zu verändern. Dies hat u.a. den Vorteil, dass die Dynamik der geregelten Strecke, z.B. für weitergehende Untersuchungen oder Testzwecke, leichter beschreib- und modellierbar ist, da sich das dynamische Verhalten des PI-Reglers infolge der einmal vorab festgelegten Nachstellzeit nicht verändert und eine entsprechende beispielsweise mathematische Beschreibung der geregelten Strecke einfach angebbar und handhabbar ist.

Vorteilhaft wird die Nachstellzeit aus Streckenzeitkonstanten, insbesondere aus der Summe der Streckenzeitkonstanten, der zu regelnden Komponente bestimmt.

Die Streckenzeitkonstanten einer zu regelnden Strecke haben Einfluss auf die Geschwindigkeit, mit welcher die Strecke auf eine Änderung mindestens eines ihrer Eingangssignale mit einer Änderung mindestens eines ihrer Ausgangssignale reagiert. Nahezu jede praktisch vorkommende Regelstrecke ist mit einer sogenannten Verzögerung behaftet, umfasst in ihrer korrespondierenden mathematischen Modellgleichung also mindestens eine Streckenzeitkonstante. Beispielsweise umfasst eine Regelstrecke, welche durch eine mathematische Modellgleichung dritter Ordnung beschrieben werden kann, drei Streckenzeitkonstanten. Eine Kenntnis der Werte der Streckenzeitkonstanten für eine betrachtete Regelstrecke ermöglicht eine gute Abschätzung der Verzögerung der Regelstrecke.

Besonders vorteilhaft ist es, wenn die Summe der Streckenzeitkonstanten der zu regelnden Strecke gebildet wird und die Nachstellzeit mittels dieser Summe bestimmt und insbesondere als ein Vielfaches dieser Summe eingestellt wird. Vorteilhaft bewegt sich dieses Vielfache im Bereich zwischen 0,1 und 2,5.

In vielen praktisch vorkommenden Fällen haben Versuche gezeigt, dass ein Vielfaches mit einem Wert von etwa 1,5 zu guten Ergebnissen führt, dass also die Nachstellzeit des PI-Reglers in diesen Fällen vorteilhaft auf einen Wert einzustellen ist, der dem Eineinhalbfachen der Summe der Streckenzeitkonstanten entspricht. Des Weiteren haben Vielfache mit einem Wert von etwa 0,7 ebenfalls zu guten Ergebnissen geführt, dass also die Nachstellzeit des PI-Reglers in derartigen Fällen vorteilhaft auf einen Wert einzustellen ist, der 70 % der Summe der Streckenzeitkonstanten entspricht. Dabei ist jedoch zu beachten, dass mit steigendem Wert für das genannte Vielfache der I-Anteil des PI-Reglers immer weniger wirkt.

In einer weiteren vorteilhaften Ausgestaltung der Erfindung wird der Verstärkungsfaktor in Schritt 4 des erfindungsgemä-ßen Verfahrens erniedrigt, wenn der zeitliche Verlauf des Istwerts eine Verweil-Zeit, während welcher der Istwert einen Wert innerhalb des Toleranzbandes aufweist, kleiner ist als ein erster vorgegebener Zeitraum.

Bei dieser Ausführungsform sollen insbesondere Schwingungen im zeitlichen Verhalten des Istwerts erkannt werden, welche sich insbesondere dadurch zeigen, dass der Istwert zwar während des Regelvorgangs einen Wert innerhalb des Toleranzbandes annimmt, das Toleranzband aber wieder verlässt und erst später wieder in das Toleranzband ein- und wieder austritt. Es wird nun die Verweil-Zeit bestimmt, während welcher sich der schwingende Istwert innerhalb des Toleranzbandes bewegt, bevor er wieder aus diesem austritt. Je kürzer diese Verweil-Zeit ist, desto schneller ändert sich der Istwert im Verlauf der Zeit, so dass in einem derartigen Fall der Verstärkungsfaktor des PI-Reglers zu verringern ist, um den Istwert während des Betriebs der technischen Anlage im Toleranzband zu belassen. Ist die Verweil-Zeit kleiner als der erste vorgegebene Zeitraum, so wird von einer zu starken Schwingung des Istwerts ausgegangen (der Istwert geht "zu schnell" durch das Toleranzband hindurch) und der Verstärkungsfaktor verringert, so dass ein derartiges, nicht tolerables Überschwingen des Istwerts über die Grenzen des Toleranzbands hinaus verhindert wird.

Der erste vorgegebene Zeitraum kann beispielsweise in Abhängigkeit von den Werten der Streckenzeitkonstanten, insbesondere in Abhängigkeit vom Wert der Summe der Streckenzeitkonstanten, bestimmt werden. So kann beim oben genannten Vergleich die Verweil-Zeit des Istwerts in eine technisch sinnvolle Relation zur Verzögerung der Regelstrecke (beschrieben durch die Streckenzeitkonstanten) gesetzt werden, da eine absolute Definition darüber, was eine zu starke Schwingung ist, nicht angegeben werden kann. Beispielsweise kann eine Temperaturänderung innerhalb weniger Minuten einen schnellen Vorgang bezeichnen, wohingegen eine Druckänderung innerhalb weniger Minuten meist einen eher trägen Vorgang charakterisiert.

Vorteilhaft wird in Schritt 4 der Verstärkungsfaktor nur dann erniedrigt, wenn zusätzlich eine erste Änderungsgeschwindigkeit des Istwerts größer ist als eine zweite Änderungsgeschwindigkeit des Sollwerts.

Bei dieser Ausgestaltung der.Erfindung wird dem Umstand Rechnung getragen, dass der Sollwert nicht nur eine konstante Größe, sondern auch eine veränderliche, insbesondere schwankende und/oder schwingende Größe, umfassen kann. Derart sich verändernde Werte des Sollwerts während des Regelvorgangs würden ebenso wie ein falsch eingestellter Wert des Verstärkungsfaktors zu Schwankungen und/oder Schwingungen des Istwerts der Regelgröße führen. Jedoch sind solche Schwankungen und/oder Schwingungen des Istwerts bei einem ebenfalls schwankenden und/oder schwingenden Wert des korrespondierenden Sollwerts sogar gewünscht, da der Istwert der Regelgröße dem Sollwert der Regelgröße während des Regelvorgangs möglichst gut folgen soll.

Um in einem derartigen Fall ein (unerwünschtes) Erniedrigen des Verstärkungsfaktors verursacht durch einen schwankenden Istwert zu verhindern, ist es bei dieser Ausführungsform vorgesehen, eine erste Änderungsgeschwindigkeit des Istwerts sowie eine zweite Änderungsgeschwindigkeit des Sollwerts zu ermitteln, um aus dem Vergleich dieser beiden Geschwindigkeiten dann schließlich festzulegen, ob der Verstärkungsfaktor zu erniedrigen ist oder nicht.

Wenn sich der Istwert schneller ändert als der Sollwert (die erste Änderungsgeschwindigkeit ist in diesem Falle größer als die zweite Änderungsgeschwindigkeit), so ist der Verstärkungsfaktor zu erniedrigen, da in diesem Fall die Schwankungen des Istwerts nicht allein durch einen schwankenden Sollwert bedingt sind, sondern durch einen wertmäßig zu groß eingestellten Verstärkungsfaktor.

Im anderen Fall, wenn sich der Wert des Istwerts weniger schnell ändert als der Wert des Sollwerts, so wird der Verstärkungsfaktor nicht erniedrigt, da davon auszugehen ist, dass die Schwankungen des Istwerts in diesem Falle hauptsächlich verursacht sind durch Schwankungen des Sollwerts und von daher eine Erniedrigung des Verstärkungsfaktors nicht notwendig und dem Regelerfolg auch nicht dienlich ist.

In einer weiteren vorteilhaften Ausgestaltung der Erfindung wird in Schritt 4 des erfindungsgemäßen Verfahrens der Verstärkungsfaktor erhöht, wenn der zeitliche Verlauf des Istwerts eine Anstiegszeit, welche den Zeitraum von Beginn einer Änderung des Sollwerts bis zum Erreichen eines momentanen Werts des Istwerts innerhalb des Toleranzbandes umfasst, aufweist, welche größer ist als ein zweiter vorgegebener Zeitraum.

Bei dieser Ausführungsform wird der Verstärkungsfaktor vergrößert, wenn die Reaktion der Regelstrecke auf eine Änderung des Sollwerts zu langsam ist. Dazu wird die genannte Anstiegszeit des Istwerts bestimmt, welche dem Zeitraum entspricht zwischen einer Änderung des Sollwerts und einem erstmaligen Erreichen eines Wertes innerhalb des Toleranzbandes durch den Istwert. Die Anstiegszeit ist also ein Maß dafür, wie schnell der Istwert der Regelstrecke auf eine Änderung des Sollwerts, insbesondere auf eine sprunghafte Änderung, reagiert und einen (gewünschten) Wert innerhalb des Toleranzbands bezüglich des Sollwerts erreicht. Der zweite vorgegebene Zeitraum dient als Kriterium, wann die Anstiegszeit des Istwerts als zu groß, die Reaktion der Regelstrecke auf eine Änderung des Sollwerts also als zu langsam anzusehen ist. Vorteilhaft wird dieser zweite vorgegebene Zeitraum bestimmt aus den Streckenzeitkonstanten der zu regelnden Komponente, insbesondere aus der Summe der Streckenzeitkonstanten. So wird die Anstiegszeit in Relation zur Verzögerung der Regelstrecke gesetzt, so dass eine Definition dessen, was als zu langsame Reaktion der Regelstrecke anzusehen ist, in einen sinnvollen technischen Zusammenhang mit zur Verzögerung der Regelstrecke gesetzt werden kann.

Die Erfindung führt weiterhin zu einem Regler zur Regelung mindestens einer Komponente einer technischen Anlage, welcher als PI-Regler ausgebildet ist und als Reglerparameter einen Verstärkungsfaktor und eine Nachstellzeit umfasst, wobei der Regler mindestens folgende Reglerkomponenten aufweist:
1. Einen ersten Reglereingang, mittels welchem der Regler mit einem vorgegebenen Wert für die Nachstellzeit beaufschlagbar ist,
2. einen zweiten Reglereingang, mittels welchem der Regler mit dem Verstärkungsfaktor beaufschlagbar ist,
3. einen dritten Reglereingang, mittels welchem der Regler mit einem Sollwert einer Regelgröße der Komponente beaufschlagbar ist, und
4. eine Adaptionseinheit, mittels welcher während des Betriebs der technischen Anlage laufend der Istwert der Regelgröße bestimmbar und der Verstärkungsfaktor in Abhängigkeit vom zeitlichen Verhalten des Istwerts veränderbar ist, bis der Istwert der Regelgröße innerhalb eines Toleranzbandes bezüglich des Sollwerts verbleibt.

Vorteilhaft ist die Nachstellzeit bestimmt aus Streckenzeitkonstanten, insbesondere aus der Summe der Streckenzeitkonstanten, der zu regelnden Komponente.

In einer vorteilhaften Ausgestaltung ist der Verstärkungsfaktor mittels der Adaptionseinheit erniedrigt, wenn der zeitliche Verlauf des Istwerts eine Verweil-Zeit, während der Istwert einen Wert innerhalb des Toleranzbandes annimmt, aufweist, die kleiner ist als ein erster vorgegebener Zeitraum.

Vorteilhaft ist der Verstärkungsfaktor mittels der Adaptionseinheit nur dann erniedrigt, wenn zusätzlich eine erste Änderungsgeschwindigkeit des Istwerts größer ist als eine zweite Änderungsgeschwindigkeit des Sollwerts.

In einer weiteren vorteilhaften Ausgestaltung der Erfindung ist der Verstärkungsfaktor mittels der Adaptionseinheit erhöht, wenn der zeitliche Verlauf des Istwerts eine Anstiegszeit, welche den Zeitraum von Beginn einer Änderung des Sollwerts bis zum Erreichen eines momentanen Werts des Istwerts innerhalb des Toleranzbandes umfasst, aufweist, welche größer ist als ein zweiter vorgegebener Zeitraum.

Die im Zusammenhang mit der Darstellung des erfindungsgemäßen Verfahrens gemachten Erläuterungen und Hinweise sowie die dargestellten Vorteile sind sinngemäß auf einen erfindungsgemäßen Regler sowie dessen Ausführungsformen anwendbar und werden daher an dieser Stelle nicht wiederholt.

Im Folgenden wird ein Ausführungsbeispiel der Erfindung näher dargestellt.

Es zeigen:
- FIG 1: die graphische Darstellung eines beispielhaften Verlaufs für den Istwert, wobei zum Einsatz bei der Erfindung als Kenngrößen eine Verweil-Zeit sowie ein erster vorgegebener Zeitraum angegeben sind,
- FIG 2: beispielhafte Verläufe von Soll- und Istwert, wobei beide Größen eine Schwingung aufweisen und zum Einsatz bei der Erfindung Kenngrößen zur Bestimmung der Änderungsgeschwindigkeit von Soll- und Istwert eingezeichnet sind,
- FIG 3: einen weiteren beispielhaften zeitlichen Verlauf des Istwerts, wobei zum Einsatz bei der Erfindung als Kenngrößen eine Anstiegszeit sowie ein zweiter vorgegebener Zeitraum angegeben sind, und
- FIG 4: einen erfindungsgemäßen Regler.

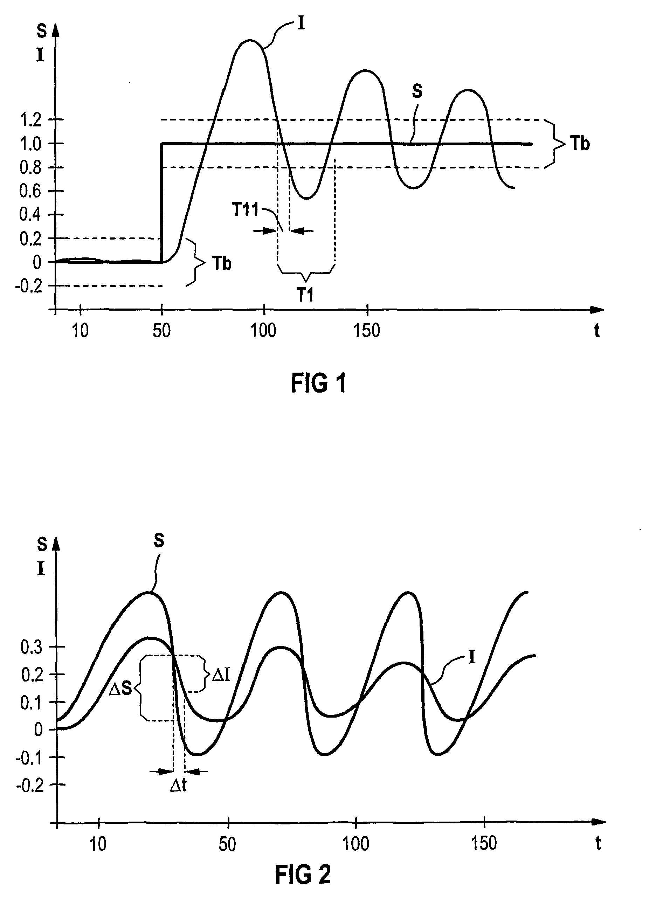

In FIG 1 ist beispielhaft der zeitliche Verlauf eines Istwerts I dargestellt, welcher eine Schwingung aufweist und einen vorgegebenen Sollwert S auch über einen längeren Zeitraum nicht genügend gut annähert, sich also insbesondere nicht innerhalb eines Toleranzbandes Tb bewegt.

Die Darstellung der FIG 1 soll das zeitliche Verhalten von Soll- und Istwert einer geregelten Komponente einer technischen Anlage zeigen. Zum Zeitpunkt t = 50 (beispielsweise t = 50 Sek.) ändert sich der Sollwert S sprungartig von S = 0 auf S = 1 und bleibt ab dem Zeitpunkt t = 50 konstant. Bei einem geregelten System ist anzustreben, dass der Istwert I der zugehörigen Regelgröße dem zeitlichen Verlauf des Sollwerts S möglichst gut folgt, wobei zum einen der Sollwert S möglichst schnell erreicht werden soll, zum anderen aber auch ein zu starkes Über- und Unterschwingen des Istwerts I bezüglich des Sollwerts S vermieden werden muss, um ein stabiles, geregeltes System zu erhalten. Insbesondere ist zu vermeiden, dass der Istwert I Schwingungen aufweist, welche im Lauf der Zeit nicht abklingen und/oder deren Amplitude Werte aufweist, welche nicht innerhalb des Toleranzbandes Tb liegen oder dieses sogar weit überragen. Das Toleranzband Tb ist dem jeweiligen konkreten Einsatzbereich anzupassen und soll eine zulässige Abweichung des Istwerts I vom gewünschten Sollwert S während des Regelvorgangs widerspiegeln.

Die Grenzen des Toleranzbands Tb müssen dabei bezüglich des Sollwerts S nicht symmetrisch sein; sie können vielmehr den Erfordernissen eines konkreten Anwendungsfalls angepasst werden.

Im Beispiel der FIG 1 kann aus dem zeitlichen Verhalten des Istwerts I geschlossen werden, dass der Verstärkungsfaktor Kp der zugrundeliegenden geregelten Komponente zu groß gewählt wurde, dass also der eingesetzte PI-Regler insbesondere auf eine durch die Differenz des Soll- und Istwerts bestimmte Regelabweichung mit einer zu großen Proportionalverstärkung reagiert, was zu der in FIG 1 beispielhaft illustrierten unerwünschten Schwingung des Istwerts I führt.

Um eine stabile Regelung zu erhalten, insbesondere, um die Anforderung an den zeitlichen Verlauf des Istwerts bezüglich des Toleranzbandes Tb erfüllen zu können, ist es erforderlich und bei der Erfindung vorgesehen, den Verstärkungsfaktor Kp laufend zu verändern, bis der Ist-Wert I der Regelgröße innerhalb des Toleranzbands Tb verbleibt. Im vorliegenden Beispiel ist der Verstärkungsfaktor Kp zu erniedrigen. Dies ist insbesondere deshalb angezeigt, da eine Verweil-Zeit T11 kleiner ist als ein erster vorgegebener Zeitraum T1. Man kann dies dahingehend interpretieren, dass der Istwert I während seines zeitlichen Verlaufs "zu schnell" durch das Toleranzband Tb hindurch tritt, was auf eine unerwünschte Schwingung des Istwerts I schließen lässt. Der Vergleichszeitraum (erster vorgegebener Zeitraum T1) wird dabei vorteilhaft mittels der Streckenzeitkonstanten der zu regelnden Komponente ermittelt, so dass der Tatsache Rechnung getragen werden kann, dass der vorher genannte Begriff "zu schnell" relativ zur systembedingten Verzögerung der zu regelnden Komponente definiert werden sollte.

Die laufende Erniedrigung des Verstärkungsfaktors Kp wird beendet, sobald der zeitliche Verlauf des Istwerts sich im Toleranzband Tb bewegt und in diesem verbleibt. Alternativ oder in Ergänzung kann die Erniedrigung des Verstärkungsfaktors Kp durch Multiplikation mit einem konstanten Wert zwischen 0 und 1 erfolgen und zwar jedes mal dann, wenn der aktuelle Istwert durch das Toleranzband hindurch getreten ist.

In FIG 2 sind die zeitlichen Verläufe von Sollwert S und Istwert I dargestellt, wobei der Sollwert S eine Schwingung aufweist, also insbesondere im Unterschied zur FIG 1 keine Bereiche konstanten Verlaufs aufweist.

Infolgedessen weist auch der Istwert I, welcher dem zeitlichen Verlauf des Sollwerts S möglichst gut folgen soll, ein schwingendes Verhalten auf.

In diesem Beispiel ist aus der Schwingung des Istwerts I nicht zwangsläufig zu schließen, dass der Verstärkungsfaktor Kp des eingesetzten PI-Reglers zu groß eingestellt ist und deshalb die Schwingung des Istwerts I verursacht ist. Eine Erniedrigung des Verstärkungsfaktors Kp in einem derartigen Fall könnte zu einem völlig unbefriedigenden Regelverhalten führen.

Es ist vielmehr zu prüfen, ob der momentan eingestellte Wert des Verstärkungsfaktors Kp für die Schwingung des Istwerts I verantwortlich ist, oder ob die Schwingung des Istwerts I lediglich verursacht ist durch das gewünschte Folgen des Istwerts I in Bezug auf den im Beispiel der FIG 2 schwingenden Sollwert S.

Der Verstärkungsfaktor Kp soll nur dann erniedrigt werden, wenn sich der Istwert I schneller ändert als der Sollwert S.

Zur Bestimmung der genannten Änderungsgeschwindigkeiten von Sollwert S und Istwert I sind in der FIG 2 beispielhaft bezüglich eines Bezugszeitraums Δt die Änderung ΔS des Sollwerts S während des Bezugszeitraums Δt sowie die Änderung ΔI des Istwerts I dargestellt. Der Quotient aus ΔS und Δt bzw. ΔI und Δt ermöglicht eine Ermittlung der genannten Änderungsgeschwindigkeiten von Istwert I und Sollwert S.

Im Beispiel der FIG 2 ist die Änderungsgeschwindigkeit des Istwerts I (erste Änderungsgeschwindigkeit) kleiner als die Änderungsgeschwindigkeit des Sollwert S (zweite Änderungsgeschwindigkeit). Es kann daher darauf geschlossen werden, dass die Schwingungen des Istwerts I zurückzuführen sind auf Schwingungen des Sollwert S, so dass im vorliegenden Fall der Verstärkungsfaktor Kp des eingesetzten PI-Reglers nicht zu erniedrigen ist.

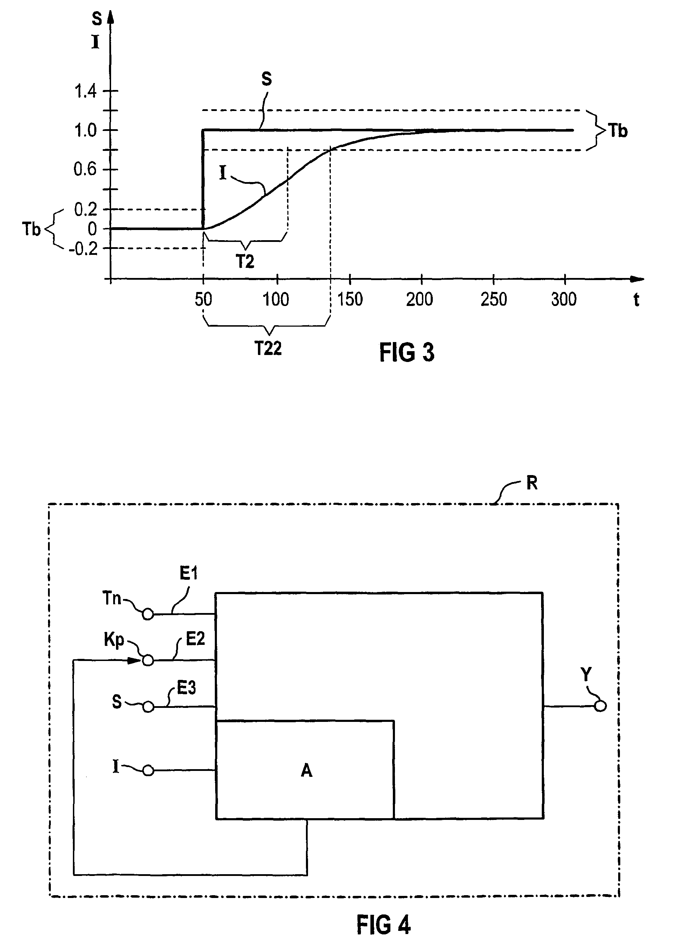

In FIG 3 ist beispielhaft der zeitliche Verlauf des Istwerts I dargestellt, wobei dieser den vorgegebenen Sollwert S nur relativ langsam erreicht.

Bei einem derartigen zeitlichen Verhalten des Istwerts I kann darauf geschlossen werden, dass der Verstärkungsfaktor Kp des eingesetzten PI-Reglers zu klein eingestellt ist, dass also der PI-Regler mit einer zu kleinen Proportionalverstärkung auf die Differenz zwischen Soll- und Istwert (Regelabweichung) reagiert.

Um festzustellen, ob der zeitliche Verlauf des Istwerts I dem Sollwert S zu langsam folgt und der Verstärkungsfaktor Kp daher zu erhöhen ist, sind im Beispiel der FIG 3 Kenngrößen eingezeichnet, nämlich eine Anstiegszeit T22 und ein zweiter vorgegebener Zeitraum T2.

Die Anstiegszeit T22 umfasst dabei den Zeitraum von Beginn einer Änderung des Sollwerts S bis zum Erreichen eines momentanen Werts des Istwerts I innerhalb des Toleranzbands. Wenn diese Anstiegszeit T22 größer ist als der zweite vorgegebene Zeitraum T2, dann reagiert die mittels eines PI-Reglers geregelte Komponente auf eine Sollwertänderung zu langsam und der Verstärkungsfaktor Kp ist zu erhöhen.

Vorteilhaft wird der zweite vorgegebene Zeitraum T2 aus den Streckenzeitkonstanten der zu regelnden Komponente ermittelt, so dass in Abhängigkeit von der systembedingten Verzögerung der zu regelnden Komponente (Regelstrecke) technisch richtig beurteilt werden kann, ob die Anstiegszeit T22 des Istwerts I zu groß und der Verstärkungsfaktor Kp daher zu erhöhen ist.

Die laufende Erhöhung des Verstärkungsfaktors Kp im Falle der FIG 3 erfolgt solange, bis der Istwert I innerhalb des Toleranzbands Tb verbleibt.

FIG 4 zeigt einen erfindungsgemäßen Regler R.

Der Regler R dient zur Regelung mindestens einer Komponente einer technischen Anlage und ist als PI-Regler ausgebildet.

Der Regler R umfasst als Reglerparameter einen Verstärkungsfaktor Kp und eine Nachstellzeit Tn.

Ein erster Reglereingang E1 ist mit einer vorgegebenen Nachstellzeit Tn beaufschlagbar.

Einem zweiten Reglereingang E2 ist der Verstärkungsfaktor Kp zuführbar und ein dritter Reglereingang E3 dient dem Erfassen eines Sollwerts S einer Regelgröße der Komponente.

Der Regler R weist außerdem eine Adaptionseinheit A, mittels welcher während des Betriebs der technischen Anlage laufend der Istwert I der Regelgröße bestimmbar und der Verstärkungsfaktor Kp in Abhängigkeit vom zeitlichen Verhalten des Istwerts I veränderbar ist, bis der Istwert I der Regelgröße innerhalb eines Toleranzbandes Tb bezüglich des Sollwert S verbleibt.

Zum Beginn des Regelvorgangs wird der Eingang E2 mit einem Anfangswert Kp0 für den Verstärkungsfaktor Kp beaufschlagt. Dieser Anfangswert Kp0 wird dann während des Regelvorgangs laufend in Abhängigkeit vom zeitlichen Verhalten des Istwerts verändert, bis der Istwert I der Regelgröße innerhalb eines Toleranzbandes Tb bezüglich des Sollwert S verbleibt. Der Regler R umfasst weiterhin einen Reglerausgang Y, welcher eine Stellgröße liefert, mittels welcher die zu regelnde Komponente angesteuert wird, um ein gewünschtes Verhalten des Istwerts I zu erreichen.

Es sei darauf hingewiesen, dass die Begriffe Reglereingang (E1,E2,E3) nicht einschränkend dahingehend auszulegen sind, dass bei einem erfindungsgemäßen Regler ein physikalischer Anschluss vorliegen muss, an welchen die genannten Größen anzulegen sind.

Der Begriff Reglereingang soll vielmehr alle Mittel umfassen, mittels welchen der PI-Regler mit den genannten Größen versorgt werden kann.

Im Falle einer analogen Realisierung des PI-Regler, beispielsweise mittels beschalteter Operationsverstärker, soll der Begriff Reglereingang alle Beschaltungsmöglichkeiten des Operationsverstärkers mittels elektronischer Bauelemente umfassen, welche in ihrer Zusammenschaltung einen bestimmten Wert für mindestens eine der Größen Tn und Kp realisieren.

Im Falle einer digitalen Realisierung des PI-Reglers, beispielsweise auf einem Digitalrechner, soll der Begriff Reglereingang alle Speicherbereiche umfassen, in welche Werte für die Reglerparameter Tn und Kp geschrieben und/oder aus welchen diese Werte ausgelesen werden.

## Patentansprüche

1. Verfahren zur Regelung mindestens einer Komponente einer technischen Anlage mittels eines PI-Reglers, welcher als Reglerparameter einen Verstärkungsfaktor (Kp) und eine Nachstellzeit (Tn) umfasst,
**gekennzeichnet durch** folgende Schritte:
a) die Nachstellzeit (Tn) wird vorgegeben,
b) ein Anfangswert (Kp0) des Verstärkungsfaktors (Kp) wird vorgegeben,
c) mindestens ein Sollwert (S) einer Regelgröße der Komponente wird vorgegeben, und
d) während des Betriebs der technischen Anlage wird laufend der Istwert (I) der Regelgröße bestimmt und der Verstärkungsfaktor (Kp) in Abhängigkeit vom zeitlichen Verhalten des Istwerts (I) verändert, bis der Istwert (I) der Regelgröße innerhalb eines Toleranzbandes (Tb) bezüglich des Sollwertes (S) verbleibt, wobei der Verstärkungsfaktor (Kp) erniedrigt wird, wenn der zeitliche Verlauf des Istwerts (I) eine Verweil-Zeit (T11) aufweist, während welcher der Istwert (I) einen Wert innerhalb des Toleranzbandes annimmt, die kleiner ist als ein erster vorgegebener Zeitraum (T1).

2. Verfahren nach Anspruch 1,
**dadurch gekennzeichnet, dass**
die Nachstellzeit (Tn) bestimmt wird aus Streckenzeitkonstanten (K1, K2,...,K3), insbesondere aus der Summe der Streckenzeitkonstanten, der zu regelnden Komponente.

3. Verfahren nach Anspruch 1 oder 2,
**dadurch gekennzeichnet, dass**
in Schritt d) der Verstärkungsfaktor (Kp) nur dann erniedrigt wird, wenn zusätzlich eine erste Änderungsgeschwindigkeit (v1) des Istwerts (I) größer ist als eine zweite Änderungsgeschwindigkeit (v2) des Sollwerts (SO).

4. Verfahren nach einem der Ansprüche 1 bis 3,
**dadurch gekennzeichnet**, das s
in Schritt d) der Verstärkungsfaktor (Kp) erhöht wird, wenn der zeitliche Verlauf des Istwerts (I) eine Anstiegszeit (T22), welche den Zeitraum von Beginn einer Änderung des Sollwerts (S) bis zum Erreichen eines momentanen Werts des Istwerts (I) innerhalb des Toleranzbandes umfasst, aufweist, welche größer ist als ein zweiter vorgegebener Zeitraum (T2).

5. Regler (R) zur Regelung mindestens einer Komponente einer technischen Anlage, welcher als PI-Regler ausgebildet ist und als Reglerparameter einen Verstärkungsfaktor (Kp) und eine Nachstellzeit (Tn) umfasst,
**gekennzeichnet durch**
- einen ersten Reglereingang (E1), mittels welchem der Regler (R) mit einem vorgegebenen Wert für die Nachstellzeit (Tn) beaufschlagbar ist,
- einen zweiten Reglereingang (E2), mittels welchem der Regler (R) mit dem Verstärkungsfaktor (Kp) beaufschlagbar ist,
- einen dritten Reglereingang (E3), mittels welchem der Regler (R) mit einem Sollwert (S) einer Regelgröße der Komponente beaufschlagbar ist, und
- einer Adaptionseinheit (A), welcher während des Betriebs der technischen Anlage laufend der Istwert (I) der Regelgröße (U) zugeführt und mittels welcher der Verstärkungsfaktor (Kp) in Abhängigkeit vom zeitlichen Verhalten des Istwerts (I) laufend veränderbar ist, bis der Istwert (I) der Regelgröße innerhalb eines Toleranzbandes (Tb) bezüglich des Sollwertes (S) verbleibt, wobei der Verstärkungsfaktor (Kp) mittels der Adaptionseinheit (A) erniedrigt ist, wenn der zeitliche Verlauf des Istwerts (I) eine Verweil-Zeit (T11), während welcher der Istwert (I) einen Wert innerhalb des Toleranzbandes annimmt, aufweist, die kleiner ist als ein erster vorgegebener Zeitraum (T1).

6. Regler nach Anspruch 5,
**dadurch gekennzeichnet, dass**
die Nachstellzeit (Tn) bestimmt ist aus Streckenzeitkonstanten (K1, K2,...,K3), insbesondere aus der Summe der Streckenzeitkonstanten, der zu regelnden Komponente.

7. Regler nach Anspruch 5 oder 6,
**dadurch gekennzeichnet, dass**
der Verstärkungsfaktor (Kp) mittels der Adaptionseinheit (A) nur dann erniedrigt ist, wenn zusätzlich eine erste Änderungsgeschwindigkeit (v1) des Istwerts (I) größer ist als eine zweite Änderungsgeschwindigkeit (v2) des Sollwerts (S).

8. Regler nach einem der Ansprüche 5 bis 7,
**dadurch gekennzeichnet, dass**
der Verstärkungsfaktor (Kp) mittels der Adaptionseinheit (A) erhöht ist, wenn der zeitliche Verlauf des Istwerts (I) eine Anstiegszeit (T22), welche den Zeitraum von Beginn einer Änderung des Sollwerts (S) bis zum Erreichen eines momentanen Werts des Istwerts (I) innerhalb des Toleranzbandes umfasst, aufweist, welche größer ist als ein zweiter vorgegebener Zeitraum (T2).

## Claims

1. Method for controlling at least one component of a technical plant by means of a PI controller that has a control ratio (Kp) and an integral-action time (Tn) as control parameters, **characterised by** the following steps:
a) the integral-action time (Tn) is predefined,
b) an initial value (Kp0) of the control ratio (Kp) is predefined,
c) at least one set value (S) of a control variable of the component is predefined and
d) during operation of the technical plant, the actual value (I) of the control variable is determined and the control ratio (Kp) is changed as a function of the temporal response of the actual value (I) until the actual value (I) of the control variable remains within a tolerance band (Tb) relative to the set value (S), with the control ratio (Kp) being reduced if the temporal response of the actual value (I) has a dwell time (T11) during which the actual value (I) assumes a value within the tolerance band that is smaller than a first defined time period (T1).

2. Method in accordance with claim 1,
**characterised in that**
the integral-action time (Tn) is determined from the system time constants (K1, K2, ..., K3), particularly from the sum of the system time constants of the component to be controlled.

3. Method in accordance with Claim 1 or 2,
**characterised in that**
in step d) the control ratio (Kp) is only reduced if additionally a first change rate (v1) of the actual value (I) is greater than a second change rate (v2) of the set value (SO).

4. Method in accordance with one of claims 1 to 3,
**characterised in that**
in step d) the control ratio (Kp) is increased if the temporal response of the actual value (I) has a rise time (T22) that includes the time period from the start of a change of the set value (S) up until reaching an instantaneous value of the actual value (I) within the tolerance band that is greater than a second predefined time period (T2).

5. Controller (R) for controlling at least one component of a technical plant, that is designed as a PI controller and has a control ratio (Kp) and an integral-action time (Tn) as control parameters,
**characterised by**
- a first controller input (E1) by means of which the controller (R) can be supplied with a defined value for the integral-action time (Tn),
- a second controller input (E2) by means of which the controller (R) can be supplied with the control ratio (Kp),
- a third controller input (E3) by means of which the controller (R) can be supplied with a set value (S) of a control variable of the component, and
- an adaption unit (A) that during the operation of the technical plant constantly applies the actual value (I) of the control variable (U) and by means of which the control ratio (Kp) can be constantly changed as a function of the temporal response of the actual value (I), until the actual value (I) of the control variable remains within a tolerance band (Tb) relative to the set value (S), with the control ratio (Kp) being reduced by means of the adaption unit (A) if the temporal response of the actual value (I) has a dwell time (T11) during which the actual value (I) assumes a value within the tolerance band that is smaller than a first predefined time period (T1).

6. Controller in accordance with claim 5,
**characterised in that**
the integral-action time (Tn) is determined from system time constants (K1, K2, ..., K3), in particular from the sum of the system time constants of the component to be controlled.

7. Controller in accordance with claim 5 or 6,
**characterised in that**
the control ratio (Kp) is then only reduced by means of the adaption unit (A) if additionally a first change rate (v1) of the actual value (I) is greater than a second change rate (v2) of the set value (S).

8. Controller in accordance with one of claims 5 to 7,
**characterised in that**
the control ratio (Kp) is increased by the adaption unit (A) if the temporal response of the actual value (I) has a rise time (T22), that includes the time period from the start of a change of the set value (S) until reaching an instantaneous value of the actual value (I) within the tolerance band, that is greater than a second defined time period (T2).

## Revendications

1. Procédé de régulation d'au moins un composant d'une installation technique au moyen d'un régulateur PI qui comprend comme paramètre de régulation un facteur d'amplification (Kp) et un temps de compensation (Tn),
**caractérisé par** les étapes suivantes :
a) on prescrit le temps de compensation (Tn),
b) on prescrit une valeur initiale (Kp0) du facteur d'amplification (Kp),
c) on prescrit au moins une valeur de consigne (S) d'une grandeur réglée du composant, et
d) pendant le fonctionnement de l'installation technique, on détermine en continu la valeur réelle (I) de la grandeur réglée et on modifie le facteur d'amplification (Kp) en fonction du comportement temporel de la valeur réelle (I) jusqu'à ce que la valeur réelle (I) de la grandeur réglée reste à l'intérieur d'une plage de tolérance (Tb) par rapport à la valeur de consigne (S), le facteur d'amplification (Kp) étant diminué lorsque l'allure temporelle de la valeur réelle (I) a un temps de séjour (T11), pendant lequel la valeur réelle (I) prend une valeur à l'intérieur de la plage de tolérance, qui est plus petit qu'un premier intervalle de temps prédéterminé (T1).

2. Procédé selon la revendication 1,
**caractérisé par le fait que** le temps de compensation (Tn) est déterminé à partir de constantes de temps de système (K1, K2, ..., K3), notamment à partir de la somme des constantes de temps de système, du composant à réguler.

3. Procédé selon la revendication 1 ou 2,
**caractérisé par le fait que**, à l'étape d), le facteur d'amplification (Kp) n'est diminué que si, en plus, une première vitesse de variation (v1) de la valeur réelle (I) est plus grande qu'une deuxième vitesse de variation (v2) de la valeur de consigne (SO).

4. Procédé selon l'une des revendications 1 à 3,
**caractérisé par le fait que**, à l'étape d), le facteur d'amplification (Kp) est augmenté si l'allure temporelle de la valeur réelle (I) a un temps de montée (T22), comprenant l'intervalle de temps compris entre le début d'une modification de la valeur de consigne (S) et l'obtention d'une valeur momentanée de la valeur réelle (I) à l'intérieur de la plage de tolérance, qui est plus grande qu'un deuxième intervalle de temps prédéterminé (T2).

5. Régulateur (R) pour la régulation d'au moins un composant d'une installation technique, qui est conçu comme un régulateur PI et qui comprend comme paramètre de régulation un facteur d'amplification (Kp) et un temps de compensation (Tn),
**caractérisé par** :
- une première entrée de régulateur (E1) au moyen de laquelle le régulateur (R) peut recevoir une valeur prescrite pour le temps de compensation (Tn),
- une deuxième entrée de régulateur (E2) au moyen de laquelle le régulateur (R) peut recevoir le facteur d'amplification (Kp),
- une troisième entrée de régulateur (E3) au moyen de laquelle le régulateur (R) peut recevoir une valeur de consigne (S) d'une grandeur réglée du composant, et
- une unité d'adaptation (A) qui envoie en continu la valeur réelle (I) de la grandeur réglée (U) pendant le fonctionnement de l'installation technique et au moyen de laquelle le facteur d'amplification (Kp) peut être modifié en continu en fonction du comportement temporel de la valeur réelle (I) jusqu'à ce que la valeur réelle (I) de la grandeur réglée reste à l'intérieur d'une plage de tolérance (Tb) par rapport à la valeur de consigne (S), le facteur d'amplification (Kp) étant diminué au moyen de l'unité d'adaptation (A) lorsque l'allure temporelle de la valeur réelle (I) a un temps de séjour (T11), pendant lequel la valeur réelle (I) prend une valeur à l'intérieur de la plage de tolérance, qui est plus petit qu'un premier intervalle de temps prédéterminé (T1).

6. Régulateur selon la revendication 5,
**caractérisé par le fait que** le temps de compensation (Tn) est déterminé à partir de constantes de temps de système (K1, K2, ..., K3), notamment à partir de la somme des constantes de temps de système, du composant à réguler.

7. Régulateur selon la revendication 5 ou 6,
**caractérisé par le fait que** le facteur d'amplification (Kp) n'est diminué au moyen de l'unité d'adaptation (A) que si, en plus, une première vitesse de variation (v1) de la valeur réelle (I) est plus grande qu'une deuxième vitesse de variation (v2) de la valeur de consigne (S) .

8. Régulateur selon l'une des revendications 5 à 7,
**caractérisé par le fait que** le facteur d'amplification (Kp) est augmenté au moyen de l'unité d'adaptation (A) si l'allure temporelle de la valeur réelle (I) a un temps de montée (T22), comprenant l'intervalle de temps compris entre le début d'une modification de la valeur de consigne (S) et l'obtention d'une valeur momentanée de la valeur réelle (I) à l'intérieur de la plage de tolérance, qui est plus grande qu'un deuxième intervalle de temps prédéterminé (T2).
